# EUROPEAN PATENT APPLICATION

(11) **EP 2 875 930 A1**
(43) Date of publication of application: **27.05.2015**
(21) Application number: 12881199.9
(22) Date of filing: 14.12.2012
(51) Int. Cl.: B29C 51/12, B32B 3/14, B32B 5/02, B60R 13/02

(54) **PRESS MOLDING WITH REINFORCING RIB AND MANUFACTURING METHOD THEREFOR**

(30) Priority: 20.07.2012 JP 2012161153
(71) Applicant: Namba Press Works Co., Ltd., Kurashiki-City Okayama 711-8688 (JP)
(72) Inventor: TODA, Yasuyuki, Kurashiki-City Okayama 711-8688 (JP); ISHIURA, Tatsuyuki, Kurashiki-City Okayama 711-8688 (JP); KURANUKI, Keita, Kurashiki-City Okayama 711-8688 (JP)
(74) Representative: Scholz, Volker
(86) International application number: PCT/JP2012/082506
(87) International publication number: WO 2014/013634

(57) **Abstract**

In order to improve strength and rigidity without increasing sheet thickness, a method is provided for easily forming a rib as a reinforcing material in press-moldings and a press-molding with a reinforcing rib. This method for manufacturing press-moldings with a reinforcing rib is characterized by the following: comprises a press-molding process for simultaneously press-molding a reinforcing rib and a thermoplastic base material sheet that are each disposed in the press-molding die; the reinforcing rib being obtained by a thermoplastic rib base material and a fiber sheet material in which multiple fibers have been accumulated and bonded, both being stacked and integrally molded so as to have a main reinforcing rib portion and a bonding portion for bonding to the thermoplastic base material sheet; the fiber sheet material having voids between the fibers; and some of the heat-softened thermoplastic base material sheet entering the voids of the fiber sheet material located in the bonding portion during the press-molding process and being fixed.

## Description

### Technical Field

The present invention relates to a press-molded article with a reinforcing rib, such as an interior/exterior component for a vehicle, and the manufacturing method thereof, wherein the reinforcing rib is bonded to the article during press-molding of the article.

### Background Art

An interior component for a vehicle (an automobile) such as door trim (a door panel), a ceiling panel, a rear shelf for a trunk, and trunk trim, or an exterior component for a vehicle such as an engine undercover (under tray) or an inner fender is produced by press-molding a sheet-like thermoplastic base material, and therefore, the product has a uniform sheet thickness as a whole. Securing sufficient sheet thickness to improve strength or rigidity of the interior or exterior component would result in an increase in weight or material cost.

To improve strength and rigidity of the interior/exterior component without increasing the sheet thickness, a reinforcing member may be provided to, for example, the back of the interior or exterior component. For example, a joining structure using a reinforcing member such as a rib inside the interior component for a vehicle has been known in the field (see Patent Document 1).

### Prior Art Document

### Patent Document

Patent Document 1: Utility Model Registration No. 2514522

### Summary of Invention

### Problems to be Solved by the Invention

The interior component for a vehicle described in the above patent document 1 comprises a joining structure having locking holes and reinforcing ribs with locking portions, the locking holes and the locking portions being locked to each other at a joining portion, to increase the rigidity of lap-joining between a center pillar upper part and a center pillar lower part so as not to form a gap between the interior parts even if one interior part is deformed.

The reinforcing ribs with locking portions formed in hook shapes at the joining portion can be produced using an injection molding die. However, since the sheet-like thermoplastic base material has low fluidity, it is difficult to form reinforcing ribs of the relatively large size described above by, for example, conventional hot press-molding.

In addition, when producing a rib as an insert part to be integrally molded with the sheet-like thermoplastic base material to manufacture the molded article having the rib, the bonding portion of the rib, which is the insert part, must be softened in advance, thereby complicating the steps for molding.

The object of the present invention is to provide a method for easily manufacturing a press-molded article with a reinforcing rib having strength and rigidity as well as reduced weight. In particular, the present invention is intended to provide a method for easily providing the reinforcing rib to the article during press-molding in which the sheet-like thermoplastic base material is heat-softened and cold press-molded to form the article. The present invention is also intended to provide a press-molded article, such as the interior and exterior components for a vehicle, with the reinforcing rib affixed as above.

### SOLUTION TO PROBLEM

In order to achieve the above object, the present invention provides a method for manufacturing a press-molded article with a reinforcing rib by simultaneously press-molding a sheet-like thermoplastic base material with a reinforcing rib being disposed in a press-molding die, respectively, wherein the reinforcing rib comprises a thermoplastic rib base material and a fiber sheet material of which a plurality of fibers are accumulated and bound, the materials being laminated and integrally molded such that the reinforcing rib has a main reinforcing rib portion and a bonding portion for bonding to the sheet-like thermoplastic base material, the fiber sheet material having voids between the fibers, and wherein, in the press-molding, some of the heat-softened sheet-like thermoplastic base material enters the voids of the fiber sheet material located at the bonding portion to which it is fixed.

According to the manufacturing method of the present invention, the press-molded article having the reinforcing rib can be easily produced. The heat-softened sheet-like thermoplastic base material enters the voids between the fibers constituting the fiber sheet material by press-molding, thereby providing an anchor (i.e., a mechanical hook) such that the sheet-like thermoplastic base material and the reinforcing rib can be sufficiently bonded at the bonding portion.

The fiber sheet material according to the present invention may be a nonwoven fabric of which the plurality of fibers overlap each other to form a web having a three-dimensional structure, the accumulated multiple fibers being bound together by heating, bonding or entangling with each other. The fibers constituting the nonwoven fabric may comprise natural fibers, chemical fibers, synthetic fibers, inorganic fibers, or a mixture thereof.

The fiber sheet material has a porous structure, and preferably, the nap on its surface is raised, allowing the heat-softened sheet-like thermoplastic base material to enter the pores of the porous fiber sheet material, and allowing the raised fibers on the surface of the fiber sheet material to enter the sheet-like thermoplastic base material (or allowing the sheet-like thermoplastic base material to wrap around the raised fibers), thereby providing greater anchoring effect such that the sheet-like thermoplastic base material and the reinforcing rib are rigidly bonded together. The pores of the porous fiber sheet material may comprise voids formed between the fibers constituting the nonwoven fabric. The voids may be formed at least on the surface (or back surface) of the fiber sheet material. The voids also may be formed inside of the fiber sheet material. The fiber sheet material may comprise needle-punched holes formed by needle punching. The voids, pores or holes may penetrate the fiber sheet material. The raised fibers on the surface (back surface) of the fiber sheet material may be formed by needle punching or by some other fiber raising process.

In addition, it is preferable that the melting point of the fiber sheet material is higher than that of the sheet-like thermoplastic base material such that the fiber sheet material does not melt in the press-molding step. When the heat-softened sheet-like thermoplastic base material and the fiber sheet material are press-bonded together, since the fiber sheet material does not melt and the voids (such as needle-punched holes or gaps between the raised fibers) are maintained, the sheet-like thermoplastic base material can enter the voids of the fiber sheet material so as to be rigidly bonded to the reinforcing rib.

Press-molding for the present invention is preferably cold press-molding which does not require oxidation prevention treatment prior to pressing, as opposed to hot press-molding, thereby improving inductivity.

The fiber sheet material employed in the present invention preferably comprises a needle-punched nonwoven fabric. Using the needle-punched nonwoven fabric as the fiber sheet material to laminate the reinforcing rib onto a surface can provide great anchoring effect between the reinforcing rib and the sheet-like thermoplastic base material which forms the body of the vehicle component.

The needle-punched nonwoven fabric may be made of chemical fibers or natural fibers. Preferably, in consideration of strength, a needle-punched nonwoven fabric made of polyester (PET) is employed as the fiber sheet material for the present invention.

The reinforcing rib is produced by laminating and simultaneously press-molding the thermoplastic rib base material and the fiber sheet material. In the press-molding, the reinforcing rib designed to improve strength and rigidity of the press-molded article is molded while the thermoplastic rib base material and the fiber sheet material are press-bonded. Since the heat-softened thermoplastic rib base material flows into the voids of the fiber base material so as to be fixed upon pressing, there is no need of an adhesive such as a hot melt film for laminating processing

Preferably, the skin material and the sheet-like thermoplastic base material are laminated and simultaneously press-molded in the press-molding step. The skin material may be accordingly selected to improve functionality and appearance of the product. A needle-punched nonwoven fabric, which may or may not be the same as that of the reinforcing rib, may be employed as the skin material.

The sheet-like thermoplastic base material may be made of a woody resin composition. The woody resin composition may comprise a wood stock material or a wood plastic material. The wood stock material is a thermoplastic material comprising wood flour and polypropylene (PP) as the main components and has excellent formability. The wood stock material is suitable for simultaneous press-molding in which step the vehicle component is molded during the bonding of the reinforcing rib. Furthermore, it is advantageous to use the wood stock material with regards to cost.

The present invention also provides a press-molded article with a reinforcing rib. According to the present invention, the press-molded article with the reinforcing rib comprises a press-molded sheet-like thermoplastic base material and a reinforcing rib, wherein the sheet-like thermoplastic base material and the reinforcing rib are fixed to each other at the bonding portion where the materials are in contact with each other, wherein the reinforcing rib comprises a thermoplastic rib base material and a fiber sheet material having been laminated and molded, the fiber sheet material comprising a plurality of fibers accumulated and bound, wherein the fiber sheet material has voids between the fibers, and wherein, at the bonding portion, the thermoplastic rib base material and the sheet-like thermoplastic base material enter the voids of the fiber sheet material to be fixed, respectively.

The press-molded article according to the present invention preferably comprises an interior or exterior component for a vehicle.

Furthermore, the present invention provides a method for manufacturing a vehicle component having a reinforcing rib. The method comprises disposing a reinforcing rib in a press-molding die for the vehicle component, the reinforcing rib having been obtained by press-molding which comprises laminating a surface of a thermoplastic base material with a fiber sheet material, and press-molding a heat-softened sheet-like thermoplastic base material using a press-molding die to mold the vehicle component while bonding the reinforcing rib to the vehicle component, thereby producing the vehicle component having the reinforcing rib, wherein the fiber sheet material of the reinforcing rib is press-bonded to the sheet-like thermoplastic base material which is formed into the vehicle component in press-molding.

As above, the reinforcing rib has been produced by laminating the surface of the thermoplastic base material with a fiber sheet material, and the fiber sheet material of the reinforcing rib is press-bonded to the sheet-like thermoplastic base material formed into the vehicle component during press-molding, thereby enabling simultaneous press-molding which comprises press-molding the vehicle component and bonding the reinforcing rib thereto.

### Advantages of the Invention

In the present invention, the pre-molded reinforcing rib is integrally bonded to the main body of the press-molded article such as the vehicle component while molding the main body, thereby facilitating manufacture of a press-molded article with improved strength and rigidity and without increasing sheet thickness, thus achieving a reduction in both weight and cost.

In other words, using the manufacturing method of the present invention, there is no need to pre-soften the bonding portion of the insert part as opposed to insert molding, and there is no need of an expensive metal die for high pressure molding as opposed to injection molding, thereby facilitating manufacture of the press-molded article with the reinforcing rib. The press-molded article obtained as described above can achieve improved strength and rigidity without increasing sheet thickness, or can maintain or improve strength and rigidity while decreasing the sheet thickness. The present invention can be applied in various products manufactured by press-molding sheet-like thermoplastic base material. In particular, manufacturing interior/exterior components for vehicles in accordance with the present invention can address problems related to reduction of vehicle body weight, which is a major factor influencing fuel consumption.

### Brief Description of the Drawings

[FIG. 1] FIG. 1 (a) and (c) is a perspective view showing a rear shelf, which is an embodiment of the vehicle component with the reinforcing rib according to the present invention. FIG. 1 (b) is an A-A end view of Fig. 1 (a).
[FIG. 2] FIG. 2 is a perspective view showing an embodiment of the reinforcing rib according to the present invention. FIG. 2 (b) schematically shows an end face of the central portion of the reinforcing rib of FIG. 2 (a).
[FIG. 3] FIG. 3 schematically shows the manufacturing process of the reinforcing rib.
[FIG. 4] FIG. 4 schematically shows how to dispose the reinforcing rib in the press-molding die.
[FIG. 5] FIG. 5 (a) schematically shows the press-molding step of the vehicle component with reinforcing rib. FIG. 5 (b) is a partially enlarged view of FIG. 5 (a).
[FIG. 6] FIG. 6 (a) schematically shows an end face of the vehicle component with the reinforcing rib according to the present invention. FIG. 6 (b) is a perspective view showing a part of the vehicle component with the reinforcing rib. FIG. 6 (c) is a partially enlarged view of FIG. 6 (a).
[FIG. 7] FIG. 7 is a perspective view schematically showing an engine under tray, which is another embodiment of the vehicle component with a reinforcing rib, and the reinforcing rib itself according to the present invention.
[FIG. 8] FIG. 8 schematically shows the press-molding step for the press-molded article with the reinforcing rib and the reinforcing rib itself.
[FIG. 9] FIG. 9 shows SEM photos of enlarged bonding portions of the press-molded articles according to the present invention.

### Best Modes for Carrying Out the Invention

The preferred embodiments which are not intended to limit the scope of the present invention will be further described below with reference to the accompanying drawings. The drawings are simplified for illustration and may not be drawn to scale.

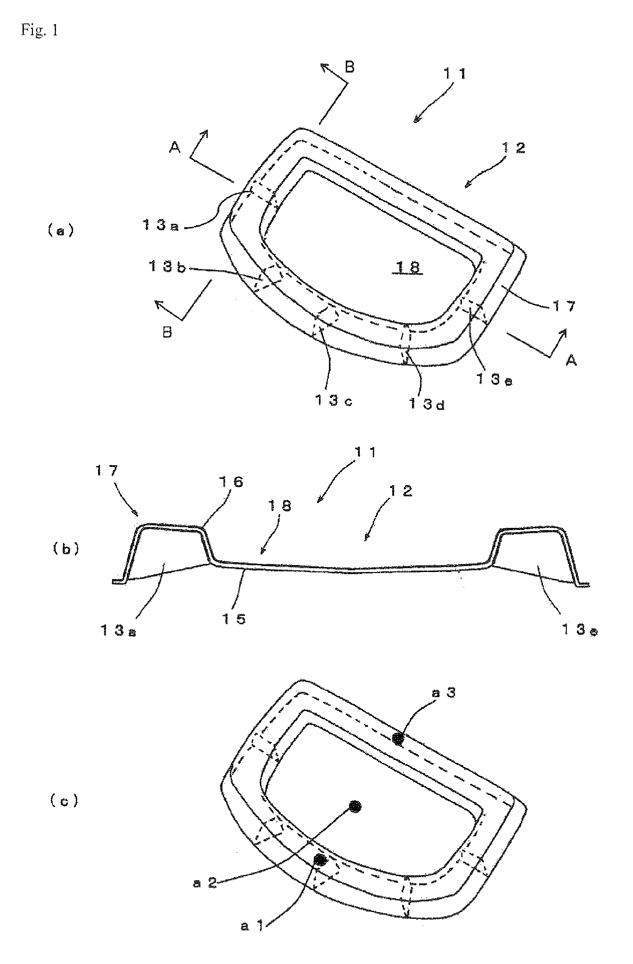

Fig. 1 (a) shows a rear shelf 11 which is one embodiment of an interior component for a vehicle with a reinforcing rib according to the present invention. Fig. 1 (b) shows A-A end view of Fig. 1 (a).

The rear shelf 11 is a cover member for covering the trunk for the vehicle and comprises a rear shelf body 12 and a reinforcing rib 13 (that is, rib 13a, 13b, 13c, 13d or 13e).

The rear shelf body 12 is produced by laminating and press-molding a sheet-like (thin plate-like) thermoplastic base material 15 and a skin material 16, and has a substantially rectangular shape in the plan view and an irregular shape in the cross sectional view.

The rear shelf body 12 comprises the base material 15 consisting of a sheet-like thermoplastic material and the sheet-like skin material 16 both having been simultaneously press-molded. That is, the rear shelf body 12 is a thin member produced by mold clamping (press-molding) the skin material 16 overlaid outside of (on) the sheet-like thermoplastic base material 15 so as to have a recessed portion 18 having a flat bottom surface and a height portion 17 surrounding the recessed portion 18, the height portion 17 having a flat top surface and a trapezoid-shaped inside hollow.

In order to improve strength of the rear shelf 11, the reinforcing ribs 13s (rib 13a, 13b, 13c, 13d and 13e) are bonded to predetermined positions in the inside hollow of the height portion 17 around the above mentioned thin rear shelf body 12.

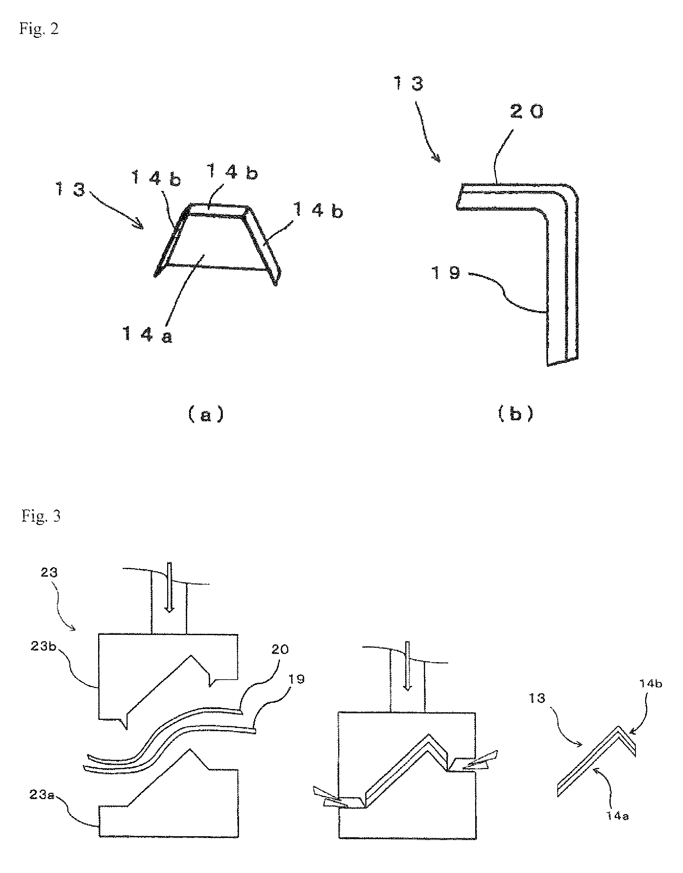

Fig. 2 (a) shows the reinforcing rib 13. The reinforcing rib 13 comprises the rib body portion 14a which is a plate-like portion having rectangular shape and the bonding portion 14b which is a wall portion provided to a part of the periphery of the rib body portion 14a. The rib body portion 14a preferably has three bonding portions 14bs. Alternatively, the rib body portion 14a may have one bonding portion 14b. The reinforcing rib 13 is formed to properly bond to the press-molded article body depending on the shape of the body or the position to which the rib is intended to be disposed.

Fig. 2 (b) shows an end face of the central portion of the reinforcing rib 13. The reinforcing rib 13 is formed of a laminate of thermoplastic rib base material 19 and fiber sheet material 20.

Referring to Fig. 3, in press-molding for the reinforcing rib 13, the sheet-like thermoplastic base material 19 (such as a wood stock material) and the fiber sheet material 20 (such as a needle-punched nonwoven fabric) are overlaid and press-molded using press-molding die 23 (a lower mold 23a and an upper mold 23b) (the end face is shown in Fig. 3) so as to form a plate-like piece member having the rib body portion 14a and the bonding portion 14b. The thermoplastic base material 19 is softened by being heated to a forming temperature using a far-infrared heater before being placed in mold 23, and then is cold press-molded with fiber sheet material 20 being overlaid on it.

The reinforcing rib 13, having been pre-molded as above, is disposed in a press-molding die for the rear shelf 11. The press-molding die comprises an upper mold having a certain shape corresponding to that of the rear shelf body 12 shown in Fig. 1 (a) and a lower mold having a groove for disposing the reinforcing rib in place, as well as a corresponding shape to the rear shelf body 12.

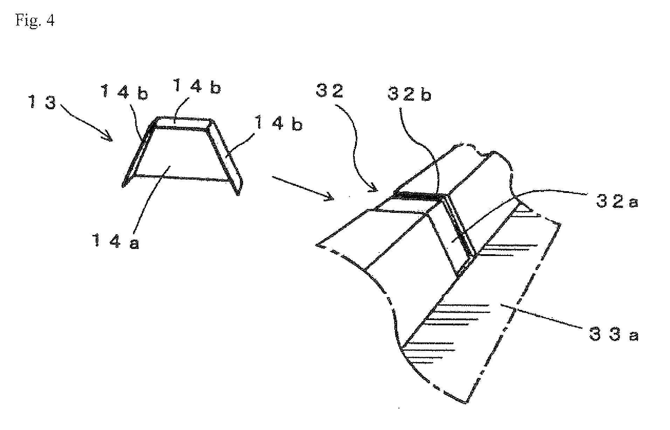

Fig. 4 shows a part of a lower mold 33a to which the reinforcing rib 13 is placed. The lower mold 33a has a convex portion and a concave portion corresponding to the shape of the rear shelf body 12. The groove 32 is provided to the convex portion and has a certain shape corresponding to that of the reinforcing rib 13. That is, the body portion 14a of the reinforcing rib 13 is inserted into a slit 32b in the groove 32, and the three bonding portions 14bs are disposed by abutting on the lower step portion 32a, which is lowered relative to the surface of the convex portion of the lower mold 33a. Such grooves (32) are provided at predetermined positions in the lower mold 33a, on which the reinforcing ribs 13a, 13b, 13c, 13d and 13e are placed, respectively.

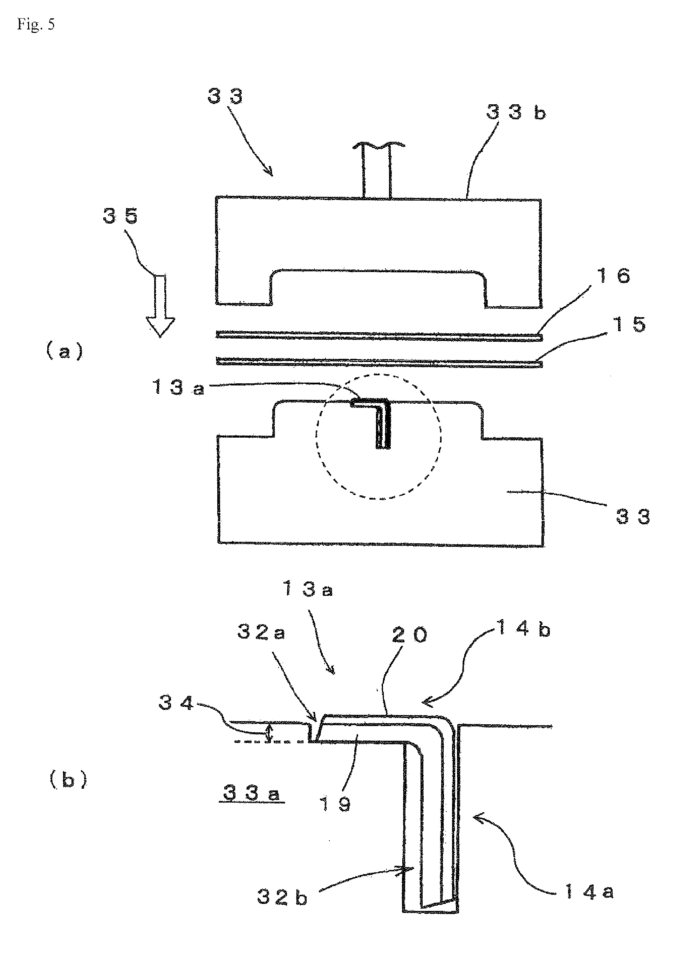

Fig. 5 (a) schematically illustrates the press-molding step of the rear shelf 11, showing the B-B end face in Fig. 1.

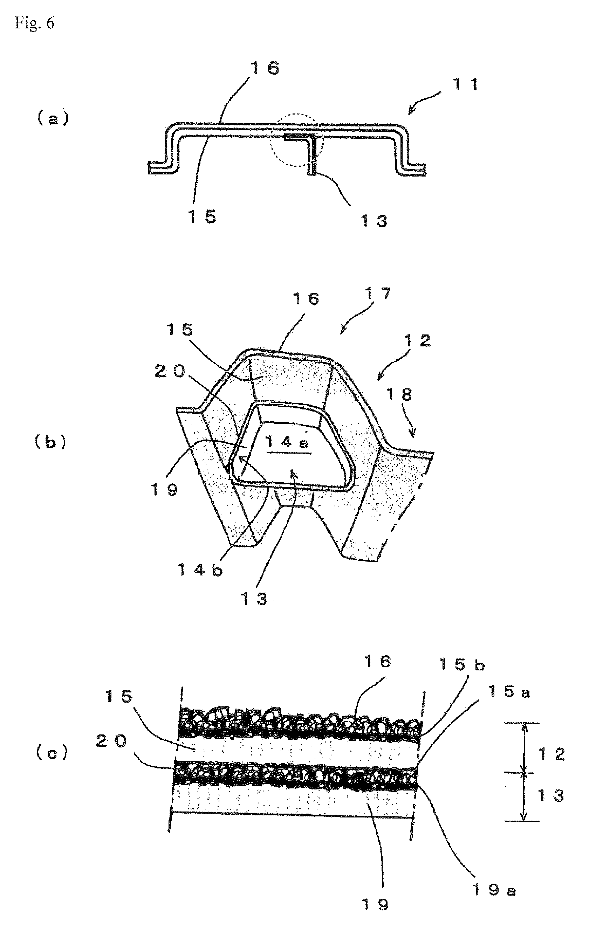

The sheet-like thermoplastic base material 15, which has been heated to be softened beforehand by such means as an upper heater and a lower heater (not shown), and the sheet-like skin material 16 are disposed over the lower mold 33a on which the reinforcing rib 13a is placed. The sheet-like skin material 16 is disposed to the upper mold 33b side, and the sheet-like thermoplastic base material 15 is disposed to lower mold 33a side. Thus, the sheet-like skin material 16 (consisting of needle-punched nonwoven fabric or the like) overlaid on the heat-softened sheet-like thermoplastic base material 15 (consisting of wood stock material or the like) is simultaneously cold press-molded by mold clamping using the upper mold 33b and the lower mold 33a of the press-molding die 33. That is, the rear shelf 11 (see Fig. 1 (a), Fig. 6 (a)) is obtained by press-molding in which the upper mold 33a (of a press machine) supported by such means as a slider (not shown) is hung down toward the lower mold 33a (arrow 35 direction) fixed to a bolster (not shown) for mold clamping.

Fig. 5 (b) shows the reinforcing rib 13a placed on the lower mold 33a (indicated by dashed circle in Fig. 5 (a)). The reinforcing rib 13a is placed on the lower mold 33a such that the fiber sheet material 20 located at the bonding portion 14b faces outside (faces the sheet-like thermoplastic base material 15). The thermoplastic base material 19 of the reinforcing rib 13a faces inside.

Preferably, the level difference 34 between the surface of the lower mold 33a and the surface of the lower step portion 32a is slightly smaller than the thickness of the reinforcing rib 13a (reinforcing rib 13) (the thickness of the thermoplastic base material 19 with the fiber sheet material 20). For example, the level difference 34 may be approximately equal to the thickness of the thermoplastic base material 19. Thus, by mold clamping to press-mold the rear shelf body 12, some of the heat-softened thermoplastic base material 15 flows to enter the voids between the fibers constituting the fiber sheet material 20 of the reinforcing rib 13 to provide an anchoring effect such that the reinforcing ribs 13s (13a, 13b, 13c, 13d and 13e) are rigidly bonded to the rear shelf body 12.

Since the reinforcing ribs (13) are bonded to predetermined positions in the rear shelf body 12, respectively, during press-molding the rear shelf body 12, the reinforcing ribs can be provided to the molded article body with high dimensional accuracy, thereby providing the design strength of the press-molded article.

As the sheet-like thermoplastic base material 15 for the rear shelf body 12 and the thermoplastic base material 19 for the reinforcing rib 13, respectively, the wood stock material, which is a woody resin composition comprising wood flour and polypropylene (PP) as main components, may be used. The wood stock material is easy to mold, and therefore, is suitable for cold press-molding.

In addition, for the sheet-like thermoplastic base material 15 or the thermoplastic material 19, a thermoplastic sheet material which can be pressure bonded to, and molded with, the fiber sheet material 20 may be used. For example, a composite sheet material mainly including a felt fiber waste material and a thermoplastic resin such as polypropylene, a composite sheet material including a pulp and a thermoplastic resin such as polypropylene, a composite sheet material mainly including hardboard waste wood and a thermoplastic resin such as polypropylene, or a composite sheet material including a glass fiber and polypropylene may be used. In addition to the composite material, a sheet material consisting of single thermoplastic resin material such as polypropylene may be used.

Fig. 6 (a) shows the rear shelf 11 of the press-molded article (end face). Fig. 6 (b) shows a part of the rear shelf 11 as seen from the backside.

Fig. 6 (c) shows a partially enlarged view of Fig. 6 (a) (indicated by a dashed circle). Both the thermoplastic base material 19 and the fiber sheet material 20 of the reinforcing rib 13 are bonded together at the bonding portion 19a. The fiber sheet 20 and the thermoplastic base material 15 of the rear shelf body 12 are bonded together at the bonding portion 15a. The thermoplastic base material 15 and the skin material 16 are bonded together at the bonding portion 15b. The bonding portions 15a and 15b are formed in one press-molding process.

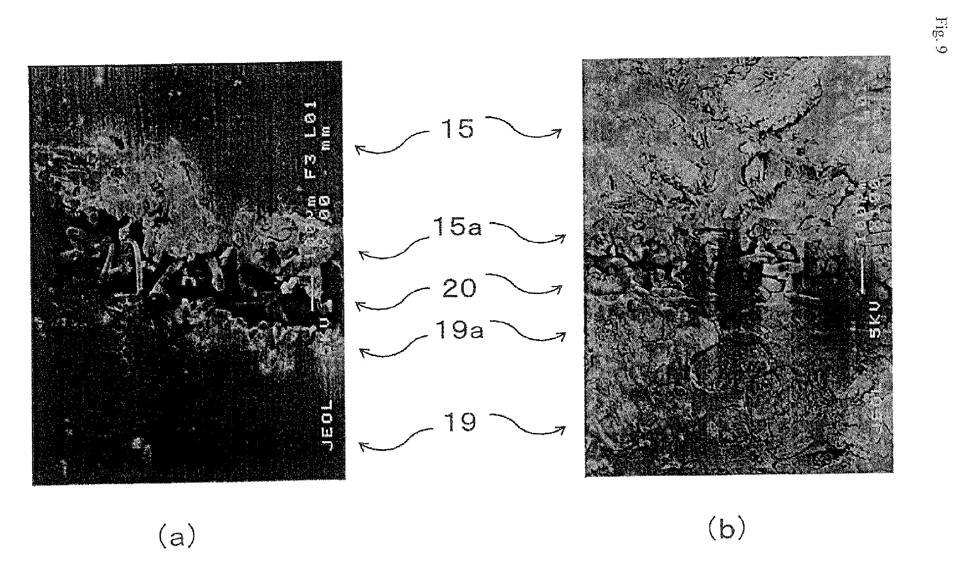

Fig. 9 shows enlarged SEM photos of such bonding portions as 15a and 19a. In Fig. 9 (a), the sheet-like thermoplastic base materials 15 and 19, each consisting of PP, being bonded together via the needle-punched nonwoven fabric 20 consisting of PET, are shown. In Fig. 9 (b), the sheet-like thermoplastic base materials 15 and 19, each consisting of wood stock, being bonded together via the needle-punched nonwoven fabric 20 consisting of PET, are shown. Fig. 9 also shows that some of the sheet-like thermoplastic base materials 15 and 19 fill and bond with the voids between the fibers of the fiber sheet material 20 (indicated as a darker portion in the middle of the image).

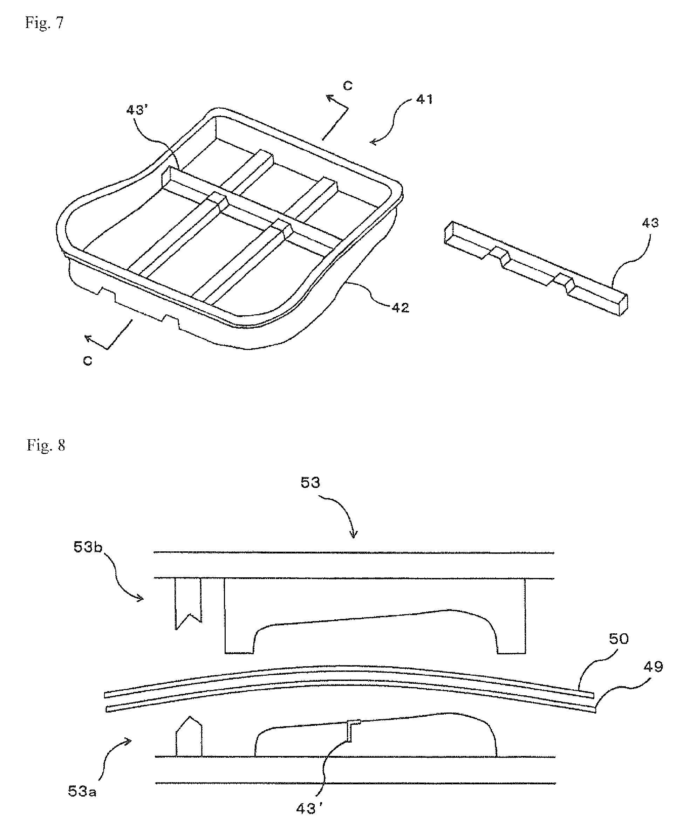

Fig. 7 shows an engine under tray with a reinforcing rib (41), which is an exterior component for a vehicle according to another embodiment of the present invention. The under tray 41 comprises an under tray body 42 and a reinforcing rib 43'. The reinforcing rib 43 is pre-molded to be placed on the press-molding die for manufacturing the other under tray.

Fig. 8 illustrates the manufacturing step of the under tray 41, showing the C-C end face in Fig. 7. Using press-mold 53, the under tray 41 and the reinforcing rib 43, which is intended to be used for manufacturing another under tray, may be simultaneously molded. A heat-softened sheet-like thermoplastic base material 49 (made of such material as wood stock) and a fiber sheet material 50 (made of such material as needle-punched nonwoven fabric) are disposed in the press-mold 53 followed by mold clamping by a lower mold 53a on which the reinforcing rib 43' is placed and an upper mold 53b, thereby manufacturing the reinforcing rib 43 for later use and the under tray with the reinforcing rib 43' (41) (see Fig. 7).

Thus, according to the manufacturing method for the interior/exterior component for a vehicle of the present invention, the reinforcing rib, having been pre-molded by press-molding, is press-bonded to the predetermined position on the vehicle component body at the same time as press-molding the vehicle component, thereby producing a vehicle component with reinforcing rib. Thus, the manufacturing method can provide a vehicle component with reinforcing rib that is light weight and has improved strength and rigidity at low cost without increasing the sheet thickness of the vehicle component body.

Table 1 as shown below illustrates the results of strength and rigidity tests of the vehicle component with the reinforcing rib according to the present invention and a vehicle component according to the conventional manufacturing method, respectively. The measurement results for the strength and rigidity tests are shown according to three loading points, a1, a2 and a3, on the rear shelf (see Fig. 1 (c)).

**[Table 1]**

| | Base material | Strength test (φ 50, 15kg, less than 10mm) | | | Rigidity test (φ 50, 5kg, less than a1:15, a2:14, a3:17mm) | | |
|---|---|---|---|---|---|---|---|
| | | a1 | a2 | a3 | a1 | a2 | a3 |
| Conventional product | WS, t2.6 | 2.0 | 1.5 | 1.4 | 10.0 | 4.0 | 5.0 |
| Present invention | WS, t1.7 | 4.0 | 1.9 | 1.7 | 8.0 | 5.0 | 11.0 |

A rear shelf (rear package tray) of vehicle ("Demio" (registered trademark) made by Mazda Motor Corporation) was used for measurements.

The sheet-like wood stock (including wood flour and polypropylene (PP) with a blending ratio of 50:50) molded by a biaxial extruder and a T-die was employed as a base material for the conventional product and for the product made according to the present invention. The product of the present invention has the reinforcing rib being press-molded followed by being press-bonded to the rear shelf body at the same time as press-molding the rear shelf body as described above. The conventional product has a rear shelf body only, without a reinforcing rib.

The wood stock base material sheet used for the conventional rear shelf body has a sheet-thickness of 2.6mm. The wood stock base material sheet used for the rear shelf body to which the reinforcing rib bonds according to the present invention has a thinner sheet-thickness of 1.7mm. Each of the above sheet-thicknesses represents the minimum size of the sheet-thickness which meets all permissible amounts of deformation for strength and rigidity. Regarding the conventional product, when sheet-thickness is reduced from 2.6mm to 2.5mm, the said product cannot meet any of the permissible amounts of deformation at loading points a1, a2 or a3. In addition, the permissible amounts of deformation are 10mm or less for the strength test and 17mm or less for the rigidity test.

An Instron universal tester capable of variable measurements such as tensile test, compression test and bending test was employed as a measuring device. Measurements were performed by setting the rear shelf (rear package tray) on the testing jig actually used for testing an automobile.

In the strength test, deflection (unit: mm) was measured by applying a load of 15kg for 1 minute using a pressure board (ϕ 50mm) followed by removing the load. In the rigid test, deflection (unit: mm) was measured by applying a load of 5kg using a pressure board (ϕ 50mm).

As shown in Table 1, the strength test indicates that, at point a1, the conventional product has a deflection of 2.0mm and the product of the present invention has a deflection of 4.0mm, and that, at points a2 and a3, deflection of the product of the present invention was only slightly larger than that of the conventional product.

The rigid test indicates that, at points a2 and a3, deflection of the product of the present invention was larger than that of the conventional product. However, at point a1, the conventional product has a deflection of 10.0mm while the product of the present invention has a deflection of 8.0mm despite the thinner sheet-thickness of the wood stock base material compared to that of the conventional product, thereby mostly showing the effect of the reinforcing rib.

### Reference Numbers

- 13 (13a, 13b, 13c, 13d, 13e): reinforcing rib
- 14a: main reinforcing rib portion
- 14b: bonding reinforcing rib portion
- 15: sheet-like thermoplastic base material
- 16: skin material
- 19: thermoplastic base material for the rib
- 20: fiber sheet material
- 32a: slit
- 32b: lower step portion
- 33: press-molding die
- 33a: lower press mold
- 33b: upper press mold
- 35: pressing direction

## Claims

1. A method for manufacturing a press-molded article with a reinforcing rib, comprising:
simultaneously press-molding a sheet-like thermoplastic base material with a reinforcing rib being disposed in a press-molding die, respectively;
wherein the reinforcing rib comprises a thermoplastic rib base material and a fiber sheet material of which a plurality of fibers are accumulated and bound, the materials being laminated and integrally molded such that the reinforcing rib has a main reinforcing rib portion and a bonding portion for bonding to the sheet-live thermoplastic base material, wherein the fiber sheet material has voids between the fibers, and wherein, in the press-molding, some of the heat-softened sheet-like thermoplastic base material enters the voids of the fiber sheet material located at the bonding portion to which it is fixed.

2. The method of claim 1, wherein the fiber sheet material has a porous structure and the nap on its surface is raised.

3. The method of claim 1, wherein the melting point of the fiber sheet material is higher than that of the sheet-like thermoplastic base material such that the fiber sheet material is not melted during press-molding.

4. The method of claim 1, wherein the press-molding is cold press-molding.

5. The method of claim 1, wherein the fiber sheet material comprises needle-punched nonwoven fabric.

6. The method of claim 1, wherein the reinforcing rib is formed by laminating and by simultaneously press-molding the thermoplastic rib base material and the fiber sheet material, during which some of the heat-softened thermoplastic rib base material enters the voids of the fiber sheet material to which it is fixed.

7. The method of claim 1, the press-molding further comprises laminating and simultaneously press-molding the sheet-like thermoplastic base material with a skin material.

8. The method of claim 1, wherein the sheet-like thermoplastic base material comprises a woody composition.

9. A press-molded article with a reinforcing rib, comprising:
a press-molded sheet-like thermoplastic base material and a reinforcing rib;
wherein the sheet-like thermoplastic base material and the reinforcing rib are fixed to each other at the bonding portion where the materials are in contact with each other, wherein the reinforcing rib comprises a thermoplastic rib base material and a fiber sheet material of which a plurality of fibers are accumulated and bound, the thermoplastic rib base material and the fiber sheet material being laminated and molded, wherein the fiber sheet material has voids between the fibers, and wherein some of the sheet-like thermoplastic base material enters the voids of the fiber sheet material to which it is fixed at the bonding portion.

10. The press-molded article of claim 9, wherein the fiber sheet material comprises a needle-punched nonwoven fabric.

11. The press-molded article of claim 9, further comprising: a skin material, wherein the skin material and the sheet-like thermoplastic base material are laminated and press-molded.

12. The press-molded article of claim 9, wherein the press-molded article is an interior component for a vehicle or an exterior component for vehicle.

13. A method for manufacturing a vehicle component with a reinforcing rib, comprising:
placing a reinforcing rib to a press-molding die for the vehicle component, the reinforcing rib having been formed by press-molding, which comprises laminating a thermoplastic base material with a fiber sheet material; and
forming the vehicle component with the reinforcing rib by press-molding a heat-softened sheet-like thermoplastic base material using the press-molding die to form the vehicle component body while bonding the reinforcing rib to the vehicle component body,
wherein the fiber sheet material of the reinforcing rib is press-bonded to the sheet-like thermoplastic base material shaped into the vehicle component body during the forming step of the vehicle component with the reinforcing rib.
